Europäisches Patentamt

(19) European Patent Office

Office européen des brevets

(11) Publication number: **0 038 654**
A1

## (12) EUROPEAN PATENT APPLICATION

(21) Application number: 81301578.1

(22) Date of filing: 10.04.81

(51) Int. Cl.³: **B 05 B 13/04**
G 05 B 19/18, B 25 J 9/00

(30) Priority: 18.04.80 GB 8012644
08.01.81 GB 8100482

(43) Date of publication of application:
28.10.81 Bulletin 81/43

(84) Designated Contracting States:
BE DE FR IT NL SE

(71) Applicant: HALL AUTOMATION LIMITED
Marconi House New Street
Chelmsford Essex CM1 1PL(GB)

(72) Inventor: Bruck, Peter
64, Bradshaw Road
Watford Hertfordshire(GB)

(74) Representative: Hooper, John Peter Lindesay
Marconi House New Street
Chelmsford, Essex CM1 1PL(GB)

(54) Relative position tracking systems.

(57) A workpiece and automatic equipment are moved with
each other side-by-side, the relative position and speed of the
latter being "controlled" by the position and speed of the
former, so that the two move together with exactly the
required speed and degree of positional offset. It provides a
production line relative position tracking system wherein an
item (12) to be worked upon is mounted for movement along a
first (master) line (10), automatic equipment (14) for effecting
an operation on the item is mounted on a carriage (13) for
movement along a second (slave) line (11) adjacent the first,
and in operation signals from an encoder (20) and indicating
the item's position and velocity on the master line, together
with signals from an encoder (22) and indicating the carriage's
position and velocity on the slave line, are used to control the
position and velocity of the equipment's carriage (13) on the
slave line, so that the movement of the automatic equipment
matches in the required manner the movement of the item.

./...

## Relative Position Tracking Systems

This invention concerns relative position tracking systems, and relates in particular to the use of such systems on production lines.

It is common practice these days for all sorts of objects to be manufactured on a production-line basis, and this is particularly true of cars, vans and other similar vehicles. By way of example, on a modern car production line the various parts making up each car - the subframe, body panels, engine, road wheels, wiring harness, electrical parts, doors, interior trim - are all delivered in the right order and at the right time and place to the line so that as that "car" proceeds along the line it may be gradually assembled into the finished vehicle. The cars in the line just ahead are in a slightly more advanced state of production, while the cars just behind are in a slightly less advanced state, and always it is the desire of the line manager to position each car as close to its neighbours as possible, and to run the line at as high a speed as possible, so as to attain the maximum line output.

Many of the jobs along the line are now done automatically, often by "robot" equipment programmed to locate the workpiece, do the job, disengage, and move on to the next workpiece. A typical example of such equipment is that used for spray-painting: a spray gun mounted on the end of a suitably manouverable arm is controlled (usually by a stored program feeding a microcomputer) to go through certain standard spraying operations which, it is predetermined, will result in the "target" object being satisfactorily painted provided it is in the right place at the right time. Unfortunately, unlike a human being, who operates more or less independently of the line, and can clamber around or in and out of the workpiece to do the required job, current automatic equipment is essentially tied to its own section of the line, and this means that it is on occasion very difficult for the operation to be performed properly if the line speed varies in an unpredictable manner, the reason for the difficulty being the fairly obvious one that the automatic equipment may lose track of where the workpiece actually is, and so may find itself trying, for example, to paint an article which is there but doesn't have the correct relative position or velocity. It is, unfortunately, all too common for a production line to run at a speed other than the intended speed, and indeed for it to stop altogether, the speed variations and stops occurring entirely at random and so being impossible to allow for in the automatic equipment's programme.

In the Specification of our copending British Patent Application No.2,045,463A we have described and claimed a solution to the problem which is suitable for the case where the workpiece moves through and/or past a workstation where there is located the automatic equipment. In that solution the automatic equipment is bodily drivable (along a subsidiary line parallel to the main line) in a direction opposite to that in which the workpiece is supposed to move, the controlling factor being the speed of the main line; if the workpiece slows down (or stops) the automatic equipment may be moved so as to maintain the required relative movement.

However this answer to the problem is not always entirely satisfactory - for example, it is unable to deal with the cases where the automatic equipment is required to move along with the workpiece instead of merely allowing the workpiece to move past it, and it is doubly unable to deal with the cases where the equipment is required to perform its function sequentially at two or more differently-positioned sites on the workpiece. The present invention seeks to deal with these difficulties by arranging for the workpiece and the automatic equipment to move with each other side-by-side, the relative position and speed of the latter being "controlled" by the position and speed of the former, so that the two move together with exactly the required speed and degree of positional offset. In this way the automatic equipment can be caused to move with exactly the same speed (for example) as the workpiece, regardless of any variations in that speed, and in any chosen position relative to the workpiece. Indeed, in a preferred aspect the invention enables both the relative speed and the relative position (offset) of the workpiece and automatic equipment to be varied even as the system operates.

In one aspect, therefore, this invention provides a production line relative position tracking system wherein an item (workpiece) to be worked upon is mounted for movement along a first line, automatic equipment for effecting an operation on the item is mounted for movement along a second line adjacent the first, and in operation signals indicating the item's position and velocity on the first line are used to control the automatic equipment's position and velocity on the second line, so that the movement of the automatic equipment matches in the required manner the movement of the item.

The type of production line for which the invention is especially suited is, as intimated above, that employed in the manufacture of automotive vehicles such as cars and vans. Such a line will normally have many work sections at each of which a different operation – welding, fitting, painting, doing up nuts and bolts – is effected, and in general the invention relates to the one operation carried out along one such section.

While it is presumed that each line employs supports, or carriages, upon which the items or the equipment (as appropriate) are mounted, the actual physical nature of either line – whether it be a ground-based track upon which the object sits, possible on a carriage, or some sort of overhead way from which the object is suspended, again, possibly from a carriage – is immaterial; the invention may be applied to any physical form of line.

Though clearly the operation itself could be any of those operations which can be effected by automatic equipment travelling along with the line, nevertheless the invention has been found particularly suitable where the operation is painting – especially spray painting – of a workpiece such as the body of a car or van, particularly when the workpiece is of a fair length relative to the normal reach of the equipment, so that the equipment needs to be re-positioned relative to the workpiece at some stage during the operation.

The two lines are adjacent each other, and most conveniently run in a parallel, side-by-side relationship. It should be noted, however, that the expression "side-by-side" is here generally intended to include both the conventional, horizontally-displayed condition and also the analogous vertically-displaced condition more usually referred to as "one above the other"; whether the most convenient arrangement is a horizontal or a vertical displacement (or some combination of the two) will usually depend in each individual case upon such circumstances as the nature of the workpiece, the type of operation being performed, and the available space.

In the system of the invention signals indicating the position and velocity of the item (workpiece) on the first line (the "master" line) are used to control the position and velocity of the equipment on the second line (the "slave" line). More specifically, the master line has associated with it means for generating signals indicative of the position and velocity of the workpiece, and the slave line has associated with it means for controlling the position and velocity of the equipment in response to those signals (and an appropriate connection is provided between the generating means and the control means whereby the generated signals may be transferred to and received by the control means).

Firstly, the signals themselves may be of any convenient physical type (for example, audio, pneumatic, hydraulic or - preferably - electrical) and may take any convenient form (for example, analogue or - preferably - digital, specifically simple pulses). Secondly, the signals may actually represent the position and/or velocity of the workpiece (for example, in an analogue system the magnitude of a positional signal might be directly derived from the resistance of the line between the line section start point and the present position of the workpiece, while the magnitude and sign of a velocity signal might be directly derived from a simple dynamo-type generator powered by the workpiece drive system). Most preferably, however, the signals are indirectly indicative of the workpiece's position/velocity (for example, the signals are very conveniently simple pulses generated by a suitable shaft encoder driven by the relative motion between the workpiece and the fixed supports for its line; counting these pulses from a specified moment - for instance, when the workpiece arrives at the beginning of the line section, and triggers off the whole operation - indicates the position of the workpiece measured from the start position, while measuring/calculating their rate indicates the velocity of the workpiece).

The means associated with the master line for generating the workpiece position/velocity signals will of course be appropriate to the type of signal required. The preferred signal is a simple electrical pulse, a succession of these pulses being counted to indicate position (the distance from some appropriate start point), their rate indicating velocity, and for that type of signal the sort of generator presently most preferred is an incremental shaft encoder powered (through suitable gears) from the workpiece drive. The encoder is conveniently of the optical disc type, and with quadrature output (so that the direction of movement can readily be determined). An acceptable encoder of this kind is the ORBIT 70D3110.

It will be appreciated that the accuracy of the system of the invention - that is to say, the accuracy with which the position and velocity of the equipment is controlled - depends to a large extent upon the nature of the signals indicating the position and velocity of the workpiece, while the accuracy required will of course depend upon the operation being performed. For most purposes (including, for example, the paint spraying of a vehicle) a very satisfactory positional accuracy is about one thirty second of an inch (about 0.8mm), so that the signal generating means employed should desirably be capable of recognising a change in position of that amount. Thus, in the preferred pulse- using system described hereinbefore a fresh pulse would be generated for every 1/32" travelled by the workpiece, and on a conventional automatic production line moving at about 13ft/min (about 4m/min) this would result in a pulse generation frequency of approximately 80Hz (and to make full use of this the equipment movement control means must therefore check the situation at least every 0.0125 sec).

The signals indicating the workpiece's position and velocity are used to control the equipment's position and velocity. Naturally, the manner in which this control is effected will depend in some measure upon the nature of the signals employed, but in general the invention uses a procedure in which the position and velocity of the equipment are compared with the position and velocity of the workpiece, and, where the resultant does not correspond to a predetermined situation, the velocity of the equipment is thereafter modified so as in a short time to cause the desired position and velocity match with the workpiece. This procedure requires that the equipment movement control means be aware of the position and velocity of the equipment, which in turn requires the system of the invention to include means for generating signals indicative of these two factors. As might be expected, while these equipment signals, and their associated generating means, may, like those relating to the workpiece, be of any suitable physical type, and may take any convenient form, nevertheless most preferably the signals are simple electrical pulses generated by another incremental shaft encoder (this time powered by the equipment drive system), and again these pulses are counted from a specified moment defining the start of the line section and the operation to be effected.

The means for generating the equipment position/velocity signals has been described as forming part of the means by which the equipment's position and velocity may be controlled (the equipment movement control means). The remaining part of the equipment movement control means is of course the apparatus which actually employs the workpiece and equipment signals to compute and effect the changes that may be required to the equipment's position and/or velocity.

As stated, the manner in which control of the equipment is carried out depends upon the nature of the signals, and clearly the nature of the control means itself is also dependent thereon. In the preferred case, however, all the signals are (or are converted to be) electrical, especially as pulses, and the control apparatus part of the control means is one of those stored programme binary digital microcomputers referred to as microprocessors, suitably connected to the equipment drive system and programmed to carry out the required operations of signal measuring/checking and equipment control. Referring to the preferred case, then, the microprocessor, operating in accordance with the programme stored therein, reads the signals indicative of the workpiece's position (and calculates its velocity), reads the signals indicative of the equipment's position (and calculates its velocity), compares the two, and if the result is unsatisfactory outputs correcting control signals to the equipment drive system. For relatively simple real-time computations such as these an Intel 8085 Central Processor Unit, together with its ancilliary memory and input/output systems, is presently quite satisfactory.

The system of the invention provides for the movement of the equipment to be matched to the movement of the workpiece upon which the equipment is operating, and the term "matched" is here used to encompass any of the ways in which the two movements (and the two positions and velocities) might be made to correspond one with another. For example, at its simplest the equipment movement is synchronised with the workpiece movement so that the workpiece and the equipment travel along together in a 1-to-1 relationship (in a slightly more complex case, the relationship might be different - the workpiece might move slightly faster than the equipment, say - and could possibly be non-linear). In a situation more akin to reality, however, it is desirable that the degree or type of matching be changeable in a controlled fashion (possible under the overall control of the automatic equipment itself), and thus it is particularly preferred that the inventive system allow part of the movements of the workpiece and equipment to be matched in a first manner over one section of the line (and over one part of the equipment's operation), and then re-matched in a second manner over a second section of the line (and over a second part of the equipment's operation). By way of example, such a matching and re-matching would be undergone in a vehicle paint spraying system in which the movement of the paint sprayer equipment is first matched to that of the vehicle so that the sprayer is positioned towards the front of the vehicle, to paint the front, and is then re-matched so that the sprayer is moved to and positioned towards the rear of the vehicle, to paint the rear.

This ability of the more preferred embodiments of the inventive system to perform having regard to signals emanating from the automatic equipment itself (or, of course, from the controller for that equipment), clearly necessitates the equipment movement control means being able to accept another set of signals indicating the status of the equipment and the operation it is performing. Like the two sets of position/velocity signals, these equipment status signals are very preferably electrical pulses, though in this case they are conveniently binary code pulses (as output by the type of microprocessor now commonly used to control much automatic equipment; an example of one such uses the Texas Instruments TMS 9900 Central Processor Unit) rather than simple pulses of the shaft encoder output variety described hereinbefore.

Moreover, just as the equipment movement control means accepts overriding control signals from the automatic equipment, so it is highly desirable that similar control signals pass in the opposite direction (and thus from the equipment movement control means to the equipment itself) in order that the operation of the equipment may be altered, or even halted, while the movements of the workpiece and equipment are in an unacceptable, unmatched condition. Again, these control signals are very conveniently binary code electrical pulses of the type output by a microprocessor.

So far, nothing has been said about how there is prepared the program instructing the automatic equipment to perform the desired operation. It is convenient, however, for the equipment whilst stationary to be "taught" the operation - for example, to be connected up to some sort of recording device, and then manually guided through the steps of the operation - upon a stationary sample of the workpiece. In use the line movements of the equipment and workpiece are "superimposed" upon the operation movements, together with any required degree of offset, so that the equipment can perform its task whilst moving along with the workpiece.

The invention extends, of course, to a production line set-up, especially an automotive vehicle production line, whenever using a relative position tracking system as described and claimed herein.

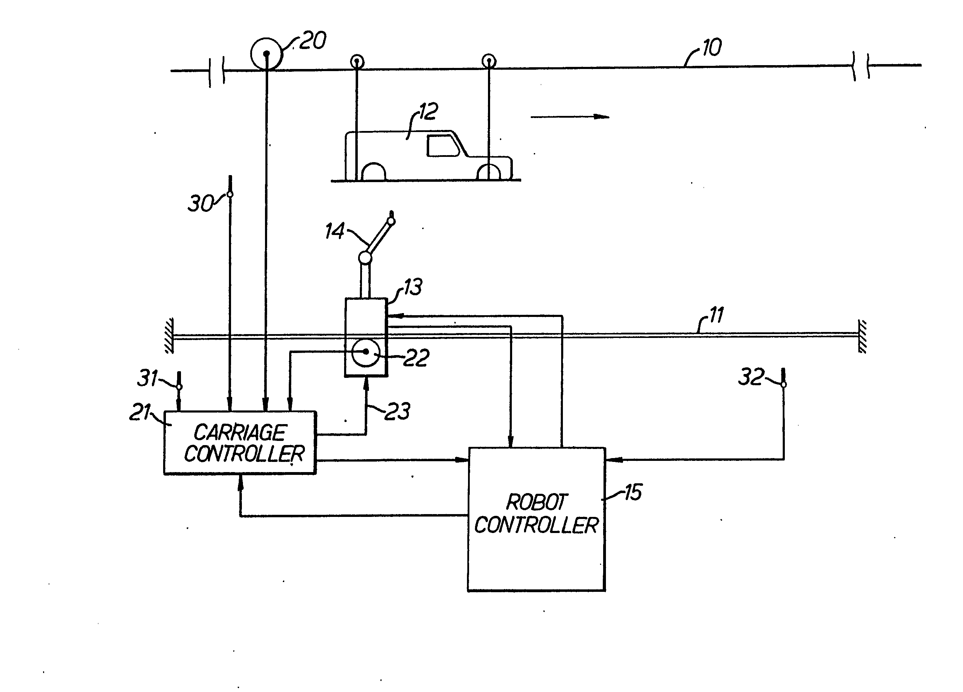

An embodiment of the invention is now described, though only by way of illustration, with reference to the accompanying drawing in which the Figure is a diagrammatic representation of an automotive production line using a relative position tracking system of the invention.

The production line set-up shown in the Figure comprises a first, or master, line constituted by an overhead left-to-right moving (as viewed) conveyor (10) alongside which is a second, or slave, line constituted by a fixed rail (11) running parallel with the master line. Slung from the conveyor 10 is a van body shell (12; the workpiece), and mounted for left and right travel on the rail 11 is a carriage (13) bearing a robot manipulator arm (14; the automatic equipment). The section of line represented is a painting section, and thus the robot arm 14 carries a spray gun (not separately shown) fed by the appropriate services (not shown). In operation the arm 14, together with a similar arm on a similar slave line (not shown) on the other side of the master line, will spray the whole of the van body 12, both inside and outside, as the body progresses through the section, the whole operation being effected under the control of a microprocessor-based robot controller (15).

The embodiment here shown of the relative position tracking system of the invention comprises a shaft encoder (20) driven by the movement of the master line conveyor 10 and providing an electrical pulse output which is fed to a robot carriage movement control system which itself comprises a microprocessor-based carriage movement controller (21), a shaft encoder (22) driven by movement of the robot carriage 13 up and down its rail 11 and feeding its output to the carriage controller 21, and a control link (23) from the carriage controller 21 to the drive system (not shown separately) of the robot carriage 13. In operation, the carriage controller 21 receives positional data on the van body 12 via encoder 20 and on the carriage 13 via encoder 22 (in each case the data is scanned at least once every hundredth of a second), computes the relative position and velocity of the body and carriage, and issues suitable instructions to the carriage drive via link 23.

In addition to its inputs from the two encoders, and its output to the carriage drive, the carriage controller 21 has other inputs and outputs. Firstly, it has an input from a start switch (30) which is activated by the arrival of a van body (as 12) at the start of this section of the production line, this input triggering the counting of pulses received both from the conveyor encoder 20 and from the carriage encoder 22. Secondly, it has an input from a "home position" switch (31) which is activated by the return of the robot carriage 13 to the start of the slave line rail 11, this input enabling the start of a fresh robot operational cycle (it is arranged that no new cycle can start until the home switch 31 has been activated, and all the carriage control variables reset accordingly). Thirdly, it has an input from the robot operation controller 15, this input being used for various purposes - for example, as a feed for the carriage controller's programme, as a means of supplying data relating to the status of the robot operation (including positional offset information), and as an entry point for overriding control signals such as those indicating that the equipment is malfunctioning, that the master line has closed down, or merely that the robot carriage 13 has reached a point too near to the end of its rail (via end-of-rail switch 32). Finally (in the embodiment shown), the carriage controller 21 has an output directly to the robot operation controller 15, through which it passes data concerning the status - thus, movement either matched in the required manner, or unmatched - of the robot carriage 13 vis-a-vis the workpiece, this data allowing the operation controller 15 to run its operational programme only when the workpiece and robot are correctly positioned, and travelling along together with the desired relative velocity, and to halt that programme if for any reason the movements of the workpiece and robot become unmatched beyond a pre-set tolerance.

The operation of the system as a whole may perhaps be more clearly understood from the following description of an operational cycle.

Assume that the robot carriage 13 is in its home position, that there is no overriding stop command from robot controller 15, that there is no initial programme offset (so that the carriage 13 is to maintain itself at a distance from the front of the van body 12 determined by the distance from the start switch 30 to the carriage home position, rather than displaced forwardly or rearwardly thereof), and that the start switch 30 is open (indicating that no van body has yet reached this section of the master line).

Firstly, a van body 12 arrives and closes the start switch 30. The carriage controller 21 now begins to sum the pulses arriving from both the conveyor encoder 20 and the carriage encoder 22. Initially the carriage 13 will have zero velocity, and hence the carriage encoder 22 will be delivering no pulses. This will cause the carriage controller 21 to issue a command for a carriage velocity increase proportional to the difference between the pulses counted for the two encoders. When the velocities and positions match (on the basis of the pulses from both encoders) a 'locked on' signal is generated and fed to the robot controller 15 to indicate that the robot operational programme can now proceed.

In the event that the conveyor 10 carries the van body 12 at an instantaneous velocity greater than that which the robot carriage 13 can follow, causing the carriage to become 'unlocked', the 'locked on' signal is removed and the robot controller 15 either moves the robot arm to a safe position or performs some other action under programme control to avoid possible damage to arm or van body.

Assume that during the robot's programme the robot 14 is required to take up a different position alongside the van body 12. The robot controller 15 accomplishes this by first ensuring that the arm of the robot 14 is safely out of the way of the van body, and then issuing a control command to the carriage controller 21 to move the carriage to the offset specified to define the new relative position. During the move, the carriage controller 21 naturally removes the 'locked on' signal (so preventing the robot from re-starting its operation), and only restores it when the new position and velocity are reached and matched, whereupon the robot controller 15 continues with its programme.

When the robot carriage 13 gets near to the end of its rail 11 a signal (from switch 30) is sent to the robot controller 15 which ensures that the robot's arm is well clear of the van body 12 and then issues either a 'STOP' command or 'GO HOME' command to the carriage controller 21.

The carriage controller 21 will only recognise a new start command when it is in its home position and the STOP command is not present.

CLAIMS

1. A production line relative position tracking system of the sort wherein an item (workpiece) to be worked upon is mounted for movement along a first (master) line, and automatic equipment for effecting an operation on the item is mounted for movement along a second (slave) line adjacent the first, characterised in that in operation signals indicating the item's (12) position and velocity on the first line (10) are used to control the automatic equipment's (14) position and velocity on the second line (11), so that the movement of the automatic equipment matches in the required manner the movement of the item.

2. A system as claimed in claim 1, wherein the master line has associated with it means for generating signals indicative of the position and velocity of the workpiece, and the slave line has associated with it means for controlling the position and velocity of the equipment in response to those signals, appropriate connections being provided between the generating means and the control means whereby the generated signals may be transferred to and received by the control means.

3. A system as claimed in claim 2, wherein the signals themselves are simple electrical pulses that are indirectly indicative of the workpiece's position/velocity.

4. A system as claimed in claim 3, wherein the signals are simple electrical pulses generated by a suitable shaft encoder driven by the relative motion between the workpiece and the fixed supports for its line.

5. A system as claimed in any of claims 2 to 6, wherein there is used a procedure in which the position and velocity of the equipment are compared with the position and velocity of the workpiece (and, where the resultant does not correspond to a predetermined situation, the velocity of the equipment is thereafter modified so as in a short time to cause the desired position and velocity match with the workpiece), and the system includes means for generating signals indicative of the position and velocity of the equipment, together with means for supplying these signals to the equipment movement control means.

6. A system as claimed in claim 5, wherein these equipment signals, and their associated generating means, are of the sort relating to the workpiece and defined in either of claims 3 and 4.

7. A system as claimed in any of claims 2 to 6, wherein the control apparatus part of the equipment control means is one of those stored programme binary digital microcomputers referred to as microprocessors, suitably connected to the equipment drive system and programmed to carry out the required operations of signal measuring/ checking and equipment control.

8. A system as claimed in any of claims 2 to 7, wherein, in order to enable the degree or type of matching of the equipment movement to the workpiece movement to be changeable in a controlled fashion, the equipment movement control means is able to accept from the equipment operation controller another set of signals indicating the status of equipment and the operation it is performing, while in addition the operation controller is able to accept a still further set of control signals from the equipment movement control means.

9. A system as claimed in any of the preceding claims, wherein the operation to be effected is the spray painting of a workpiece which is of a fair length relative to the normal reach of the equipment, so that the equipment needs to be re-positioned relative to the workpiece at some stage during the operation.

10. A system as claimed in any of the preceding claims, wherein the production line is one employed in the manufacture of automotive vehicles.

1/1

0038654

## EUROPEAN SEARCH REPORT

European Patent Office

Application number

EP 81 30 1578

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | JP - A - 53 3438 (MATSUSHITA DENKI SANGYO K.K.) <br> * Abstract * <br><br> -- | 1-3,6, 8,9 | B 05 B 13/04 <br> G 05 B 19/18 <br> B 25 J 9/00 |
| X | JP - A - 52 117 938 (MATSUSHITA DENKI SANGYO K.K.) <br> * Abstract * <br><br> -- | 1-3,6, 8,9 | |
| | JP - A - 53 102 568 (DAIFUKU KIKO K.K.) <br> * Abstract * <br><br> -- | 1-6,8, 9 | TECHNICAL FIELDS SEARCHED (Int. Cl.³) <br><br> B 05 B <br> G 05 B <br> B 25 J |
| | GB - A - 2 013 934 (GENERAL MOTORS CORP.) <br> * Figure 1; page 1, lines 121-130; page 2, lines 1-9 * <br><br> -- | 1-4,6-9 | |
| | FR - A - 2 435 329 (ASSOCIATION DES OUVRIERS ET INSTRUMENTS DE PRECISION) <br> * Page 5, lines 20-27; figure 1 * <br><br> -- | 7 | |
| | FR - A - 2 397 234 (BASFER S.R.L.) <br> * Figure 2 * <br><br> -- | 9,10 | |
| DP X | GB - A - 2 045 463 (HALL AUTOMATION LTD.) <br> * Page 1, lines 105-123; claims 10-13; figures 1,2 * <br> ./. | 1-3,5, 6,8-10 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 28-07-1981 | COLPAERT |

EPO Form 1503.1 06.78

## EUROPEAN SEARCH REPORT

European Patent
Office

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| XEP | & FR – A – 2 453 002 | | |
| XEP | & DE – A – 3 012 088 | | |
| | ---- | | |

TECHNICAL FIELDS
SEARCHED (Int. Cl.³)

EPO Form 1503.2   06.78